# FASCICULE DE BREVET EUROPEEN

(11) **EP 0 903 073 B1**
(45) Date de publication et mention de la délivrance du brevet: **01.12.1999**
(21) Numéro de dépôt: 98440207.3
(22) Date de dépôt: 11.09.1998
(51) Int. Cl.: A01D 34/68

(54) **Dispositif de commande pour tondeuses à gazon**
Antriebsvorrichtung für Rasenmäher
Driving device for lawnmowers

(30) Priorité: 12.09.1997 FR 9711531
(43) Date de publication de la demande: 24.03.1999
(73) Titulaire: Outils Wolf (Société Anonyme à Directoire et Conseil de Surveillance), 67160 Wissembourg (FR)
(72) Inventeur:
(74) Mandataire: Nuss, Pierre

(56) Documents cités:
- EP-A- 0 791 288
- DE-U- 8 813 067
- GB-A- 2 127 666
- US-A- 4 090 345
- US-A- 5 279 101

## Description

L'invention concerne un dispositif de commande pour tondeuses à gazon à moteur autotractées, composé d'un guidon muni de deux leviers de commande pour l'entraînement, qui sont montés sur le guidon de manière à pouvoir passer d'une position de marche sur le guidon à une position dans laquelle ils font saillie de celui-ci, et qui ne permettent une mise en marche que lorsqu'ils sont actionnés simultanément, au moins l'un des leviers de commande cités faisant office de dispositif d'homme mort et le guidon présentant éventuellement encore d'autres leviers, notamment pour le dispositif de traction.

On connaît des dispositifs de commande de ce genre sous diverses formes de réalisation, car dans la plupart des pays, les consignes de sécurité requièrent que la mise en service de la tondeuse à gazon, c'est-à-dire la mise en marche de l'entraînement des couteaux ou le démarrage du moteur dans le cas d'un couteau solidaire de l'arbre menant, procède de deux manoeuvres distinctes. Cela doit permettre d'exclure une mise en marche involontaire, par exemple en heurtant par hasard un levier de commande.

Ces exigences sont satisfaites par le fait que la mise en service n'est possible qu'en actionnant dans le bon ordre deux leviers de commande et que l'un des leviers de commande fait office de dispositif d'homme mort, de manière à ce que la tondeuse, ou tout au moins le couteau, s'arrête automatiquement lorsque l'utilisateur ne maintient plus le levier de commande correspondant dans la position prescrite.

En plus des deux leviers de commande cités, d'autres leviers sont généralement nécessaires, notamment pour mettre en marche et couper le dispositif de traction et, éventuellement, pour modifier la vitesse de déplacement.

Ce nombre important d'organes de commande qui, en outre, font saillie du guidon dans différentes directions rend le dispositif de commande un peu surchargé et visuellement peu attractif. De plus, la manoeuvre en est plus difficile, et notamment d'un point de vue ergonomique, il est souvent contraignant et pénible de maintenir un ou deux dispositifs d'homme mort.

À partir de là, le but de la présente invention consiste à indiquer un dispositif de commande répondant parfaitement et en tout point aux consignes de sécurité, mais qui ait un aspect agréable et qui soit facile à manoeuvrer.

Conformément à l'invention, ce but est atteint par le fait que l'un des deux leviers de commande est réalisé en tant qu'embrayage et, lorsqu'il est actionné, établit une liaison entre lui et/ou l'autre levier de commande, d'une part, et l'entraînement, d'autre part, et que, à l'état désaccouplé, les deux leviers se mettent automatiquement dans une position sur le guidon dans laquelle ils n'en dépassent pas.

L'avantage qui en découle est que, lorsque la tondeuse à gazon ne fonctionne pas, donc lorsqu'elle est à l'arrêt, les leviers de commande ne dépassent plus du guidon, mais restent, tout comme en position de marche, appliqués contre le guidon ou dans l'alignement de celui-ci. Ils se confondent alors pour former une seule unité avec le guidon, et la ligne de l'ensemble du dispositif de commande apparaît sensiblement plus nette que celle des systèmes connus comportant des organes de commande faisant saillie.

Afin que les leviers de commande à l'état désaccouplé reviennent dans leur position rabattue vers le guidon, ils sont contraints de préférence par leur poids propre et/ou par la force d'un ressort en direction du guidon. Cette contrainte doit être telle qu'à l'état accouplé, la somme des forces agissant vers le guidon soit inférieure à la somme des forces antagonistes, ceci pour que le levier de commande concerné puisse simultanément faire office de dispositif d'homme mort.

Pour faciliter la manoeuvre, il est recommandé de monter le levier de commande réalisé en tant qu'embrayage sur l'autre levier de commande et qu'en embrayant, le premier levier de commande se mette en liaison active avec l'autre levier de commande de telle manière que le déplacement de l'autre levier de commande en position de marche entraîne automatiquement le levier de commande faisant office d'embrayage. De ce fait, il ne faut manoeuvrer à deux mains qu'au début, pour éloigner l'un et l'autre des leviers de commande de leur position sur le guidon en les faisant pivoter, alors que, pour les rabattre après qu'ils ont au moins parcouru un court trajet, il ne faut plus actionner qu'un levier de commande. Cet enchaînement des mouvements est rendu possible par le fait que le levier de commande réalisé en tant qu'embrayage est réalisé à la manière d'une barre et est disposé sous l'autre levier de commande, approximativement dans l'alignement de celui-ci.

L'embrayage pour créer la liaison avec l'entraînement se produit opportunément lorsqu'au moins l'un des leviers de commande est dans une position dans laquelle il fait saillie du guidon, afin que le levier de commande puisse être rabattu comme d'habitude en position de marche sur le guidon pendant le fonctionnement.

Le débrayage s'effectue automatiquement lorsque le levier de commande n'est plus maintenu par l'utilisateur en position de marche sur le guidon, à l'occasion de quoi il est recommandé de laisser le levier de commande parcourir un trajet libre d'environ 1/2 cm à 2 cm avant que le débrayage n'ait effectivement lieu. De ce fait, l'utilisateur n'a pas besoin d'appuyer trop fortement le levier de commande contre l'autre levier de commande, et un relâchement inconscient de la prise ne provoque pas encore l'arrêt du dispositif de coupe.

Pour réduire encore davantage la force de maintien, il est avantageux de soumettre le levier de commande, lorsqu'il se trouve à l'état accouplé en position de marche, directement ou indirectement à la force d'un ressort, par exemple d'un cliquet d'arrêt faisant ressort, lequel sollicite le levier de commande avec une force préalablement définie en direction du guidon lorsque la prise se relâche. Dans ce cas également, il convient de s'assurer que cette force ne suffit pas à maintenir le levier de commande en position de marche alors que l'utilisateur a complètement lâché le levier de commande.

Une forme de réalisation de l'invention prévoit que l'embrayage est composé d'une griffe placée sur le levier de commande, qui est en liaison active amovible avec un levier agissant sur l'entraînement et que le débrayage est opéré par un verrou mobile qui s'enclenche sur le levier de commande.

En ce qui concerne le levier de commande réalisé en tant qu'embrayage, il est recommandé de le monter sur l'autre levier de commande et de monter ce dernier sur le guidon. Mais au lieu de cela, les deux leviers de commande peuvent aussi bien être montés chacun à part sur le guidon.

L'autre levier de commande est opportunément réalisé en tant qu'étrier en forme de U et, en position de marche, est appliqué contre le guidon, approximativement dans l'alignement de celui-ci. Grâce à une baguette profilée en conséquence, il peut même partiellement entourer le guidon, ce qui donne encore davantage l'impression que les deux organes forment une unité. En outre, du fait de la surface d'appui plus large, la baguette profilée facilite la manoeuvre du levier de commande.

D'autres caractéristiques et avantages de l'invention sont indiqués dans la description ci-après d'un exemple de réalisation faite à l'appui du dessin ; les figures montrent :
- Figure 1: une vue de biais dans le sens opposé au sens de la marche de la partie supérieure du guidon et des organes de commande ;
- Figure 2: une vue de côté du dispositif de commande dont l'organe de commande faisant office de dispositif d'homme mort est accentué ;
- Figure 3: la même vue de côté que la figure 2, mais avec accentuation de l'organe de commande faisant office d'embrayage et du mécanisme secondaire pouvant être mis en liaison active avec ce dernier, qui s'étend entre l'arbre menant et le couteau, vers le moteur ou vers l'embrayage ;
- Figure 4: la même vue de côté, mais avec accentuation d'un cliquet d'arrêt faisant ressort ;
- Figure 5: la même vue de côté, mais avec les leviers de commande relevés ;
- Figure 6: la même vue de côté que la figure 5 avec représentation en pointillés de la position embrayée ;
- Figure 7: la même vue de côté, mais avec les leviers de commande remis en position de marche.

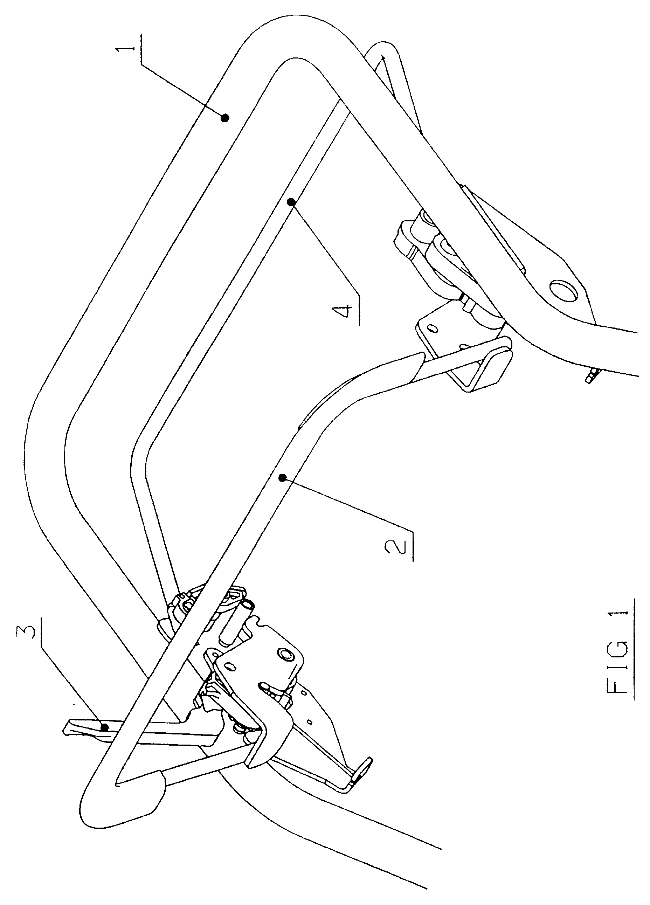

Sur la figure 1, on voit l'extrémité supérieure d'un guidon traditionnel 1 qui est monté dans la partie inférieure, non représentée, sur le carter d'une tondeuse. Le guidon 1 porte deux leviers de commande 2 et 3 pour le dispositif de coupe et un autre levier 4 pour le dispositif de traction. Tous les leviers sont montés de façon pivotante et se trouvent pendant le fonctionnement dans une position rabattue contre le tube transversal horizontal du guidon 1.

Sur la figure 1, les leviers de commande 2 et 3 se trouvent dans une position fictive qui correspond à la position de repos des dispositifs de commande traditionnels dont les leviers de commande font saillie du guidon dans différentes directions. En revanche, dans le cas de la présente invention, les leviers de commande 2 et 3 doivent aussi être appliqués contre le guidon 1 en position de repos ou être dans l'alignement de celui-ci et donner l'impression de former une unité avec lui.

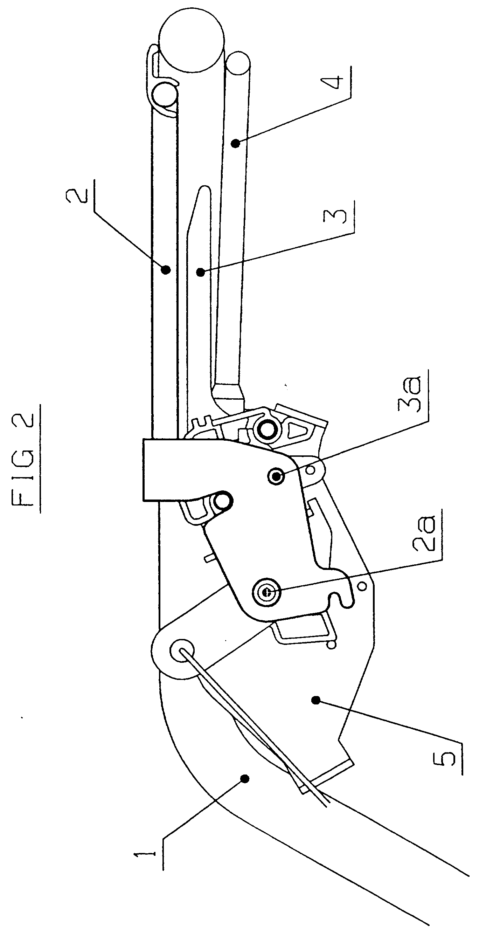

La figure 2 représente la manière dont le levier de commande 2 est monté. Il fait office de dispositif d'homme mort et est monté sur une pièce rapportée 5 sur le guidon 1 par le biais d'un palier oscillant fixe 2a comportant un axe de pivotement horizontal, et ce, de manière à ce qu'il puisse pivoter de la position représentée, dans laquelle il est approximativement dans l'alignement du guidon 1, vers le haut.

Il convient de remarquer dès à présent que le levier de commande 2 présente un palier 3a comportant également un axe horizontal, sur lequel est monté le levier de commande 3 le plus court.

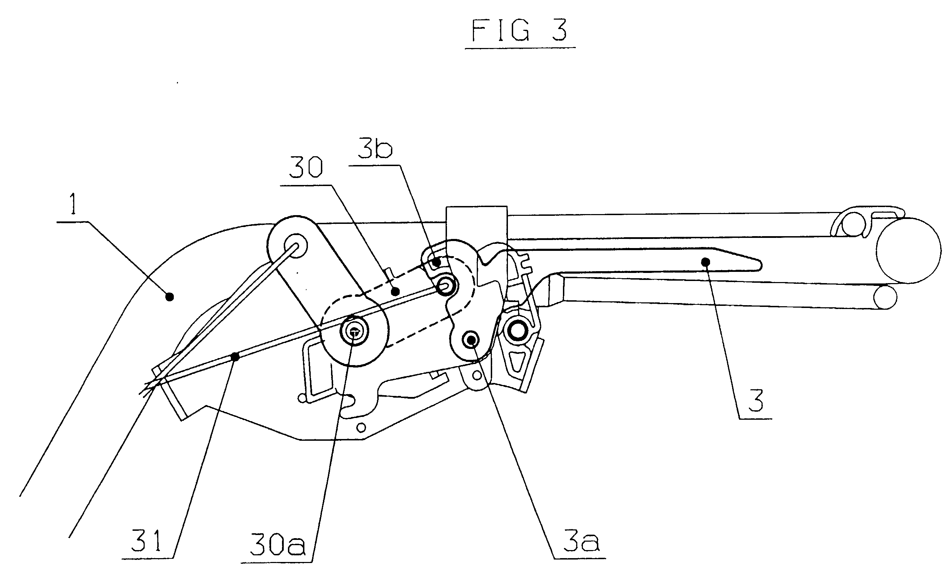

La femme du levier de commande 3 est visible sur la figure 3. Il est disposé sous le levier de commande 2, approximativement dans l'alignement de celui-ci. On voit notamment qu'il présente une griffe 3b, et que cette griffe 3b peut être mise en prise avec un levier 30 formé en conséquence. Pour ce faire, la griffe comporte une ouverture approximativement semi-circulaire dans laquelle se met en prise un axe du levier 30, de façon à créer une liaison autobloquante.

Le levier 30 est monté dans la pièce rapportée 5 de façon à pivoter autour d'un axe horizontal 30a et porte une tige 31, un câble Bowden ou analogue, à l'aide de laquelle (duquel) le moteur est mis en marche et coupé dans le cas où le couteau est solidaire de l'arbre menant, ou à l'aide de laquelle (duquel) le couteau est accouplé ou désaccouplé.

Sur la figure 3, le levier 30 est, d'une part, représenté en traits pleins et en gras ; cela correspond à la position dans laquelle il n'est pas en prise avec la griffe 3b et dans laquelle le moteur ou l'entraînement des couteaux est coupé.

D'autre part, il est représente en pointillés dans une position correspondant à un pivotement de 90° par rapport à la position précédemment évoquée ; il s'agit là de la position de marche dans laquelle les couteaux tournent. L'axe de pivotement 30a du levier 30 coïncide avec l'axe 2a du levier de commande 2.

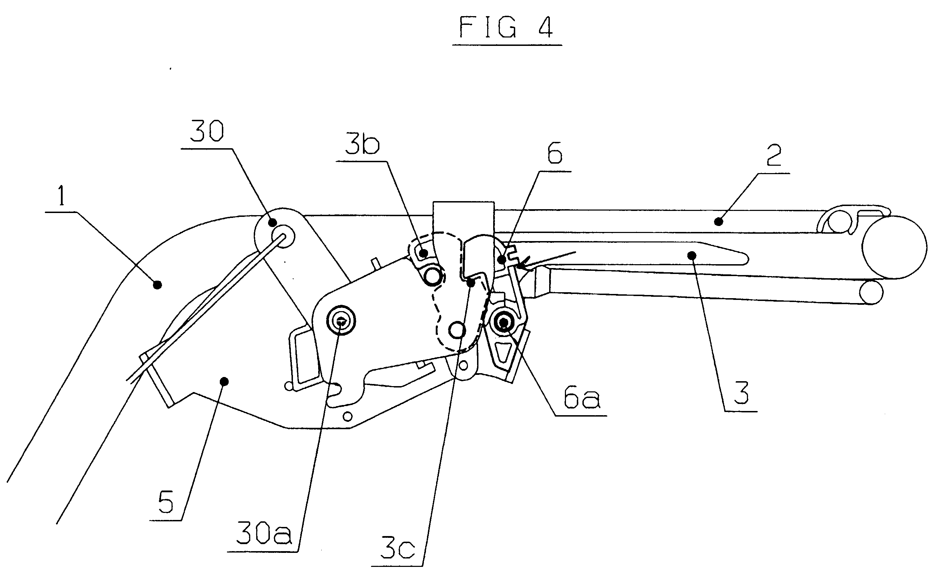

La figure 4 montre de façon accentuée un verrou 6 ayant la forme d'un cliquet d'arrêt. Il est monté dans la pièce rapportée 5 de façon à pivoter le long d'un axe horizontal 6a et est en liaison active avec un épaulement 3c de la griffe 3b décrite précédemment. Le verrou 6 est contraint par un ressort non représenté plus en détail dans le sens de la flèche, donc dans le sens de verrouillage. La forme et l'orientation des surfaces de verrouillage et la pression du ressort sont cependant choisies de telle manière que la réaction du levier 30 s'exerçant dans le sens de la flèche autour du palier 30a supprime le verrouillage entre le verrou 6 et la griffe 3b ou le verrouillage du levier de commande 3 qui y est relié, dès que l'utilisateur ne maintient plus assez correctement le levier de commande dans la position de marche sur le guidon 1 représentée sur la figure.

La fonction du verrou 6 consiste donc à forcer le désaccouplement du levier 30 et de la griffe 3b lorsque l'utilisateur lâche le levier de commande 2. Cela évite que la fonction d'entraînement commandée (frein ou embrayage-frein) ne patine.

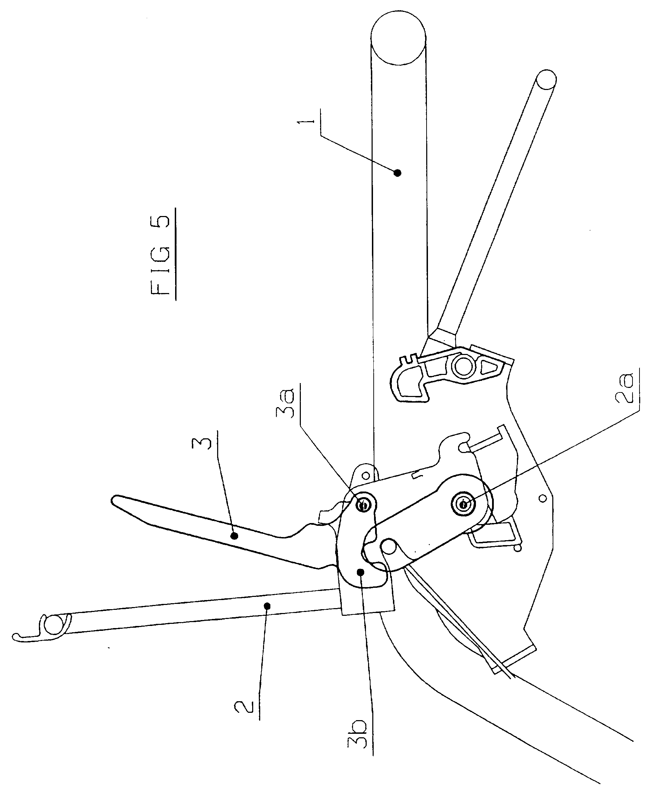

Le fonctionnement du dispositif de commande est expliqué à l'appui des figures 5 à 7. La figure 5 montre le levier de commande 2 et le levier de commande 3 qui y est relié de manière articulée et qui fait office d'embrayage, en position haute. L'utilisateur doit les faire pivoter dans cette position s'il veut faire démarrer la tondeuse à gazon. En pratique, il lui suffit de faire pivoter le levier de commande supérieur 2, car le levier de commande inférieur 3 est alors automatiquement entraîné.

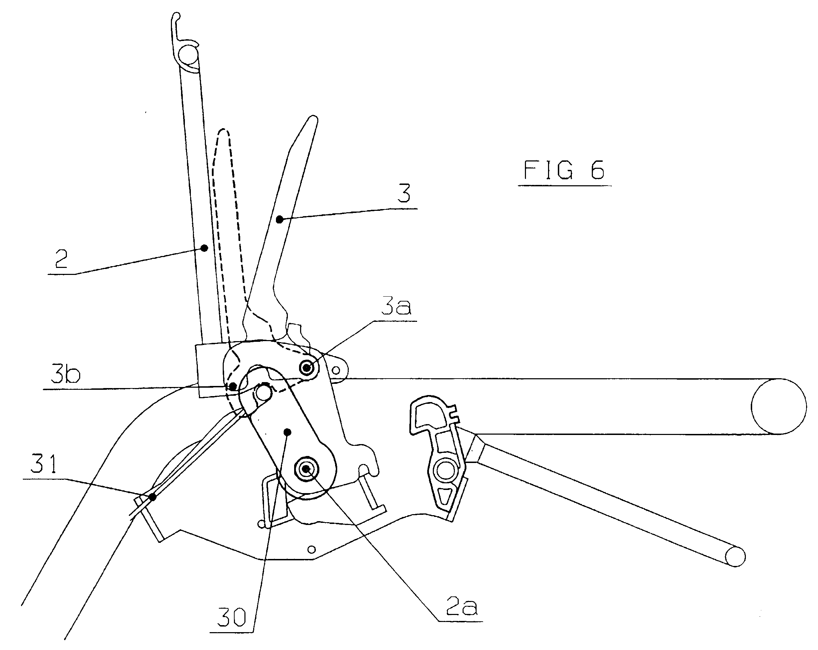

Puis l'on fait pivoter le levier de commande 3 un peu plus vers l'avant contre la force d'un élément à ressort non représenté, jusqu'à ce qu'il vienne s'appliquer contre le levier de commande 2. Cela est représenté en pointillés sur la figure 6. Au cours de ce pivotement, la griffe 3b qui en est solidaire se met en prise avec le levier 30 qui est responsable, par le biais de son mécanisme secondaire 31, de la mise en marche et de l'arrêt du moteur, ou de l'accouplement et du désaccouplement du couteau. Ainsi, le levier 3 provoque l'accouplement du levier de commande 2 et du levier 30.

La griffe 3b est profilée et positionnée par rapport à l'axe de pivotement 3a du levier 3 et par rapport à l'axe de pivotement 2a du levier 2 de telle manière que la griffe 3b reste accouplée au levier 30 lorsque l'on rabat le levier de commande 2 en arrière et lorsque le levier 3 est lâché après que le levier de commande a commencé à se rabattre. Par conséquent, le rabattage du levier de commande 2 provoque un entraînement correspondent du levier 30.

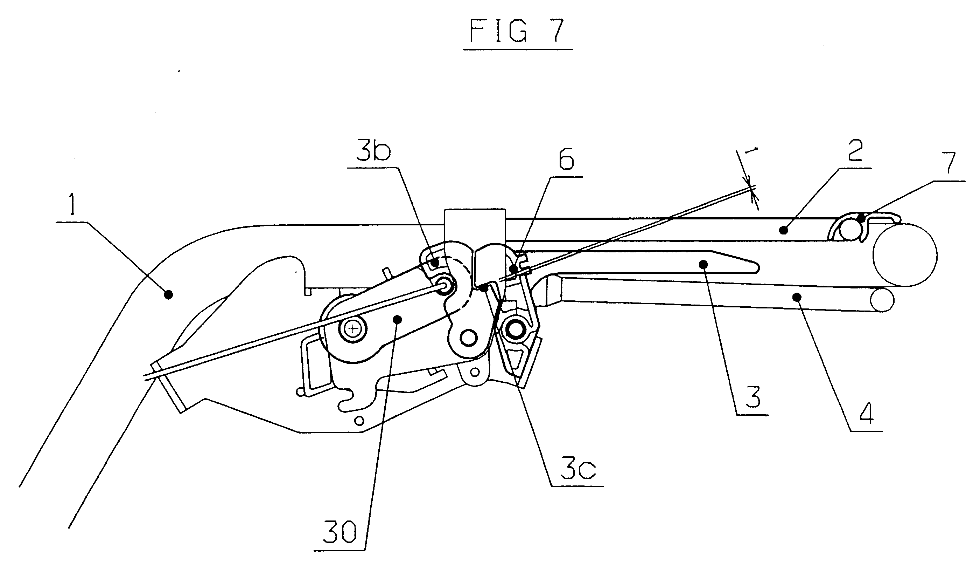

La figure 7 montre les leviers 2 et 3 en position rabattue. On voit que le levier 30 a également effectué un pivotement d'environ 90°. Comme le levier 30 a pivoté, l'entraînement des couteaux est maintenant réalisé.

Pour maintenir l'entraînement, il faut que l'utilisateur continue à maintenir le levier de commande 2 dans la position basse. En même temps, il peut aussi maintenir le levier 4 pour le dispositif de traction dans la position haute, si bien que le moteur va faire avancer la tondeuse.

Si l'utilisateur ne maintient plus fermement le levier de commande 2 dans la position de marche représentée, par exemple parce qu'il veut vidanger le bac collecteur d'herbe, la force de rappel au niveau du levier 30 pousse automatiquement le levier 2 vers le haut en raison de son accouplement avec le levier 30. Ce faisant, l'épaulement 3c fixé sur le levier 3 ou sur sa griffe 3b vient s'appliquer contre le verrou 6. L'épaulement 3c est positionné et orienté de telle manière que, lorsqu'il vient heurter le verrou 6, il se crée une composante de forces qui tend à détacher la griffe 3b du levier 30, c'est-à-dire à désolidariser ces deux pièces. La conséquence en est qu'en lâchant le levier de commande 2, l'accouplement entre celui-ci et le levier 30 est levé et que ce dernier, du fait de sa force de rappel, revient à sa position initiale, comme le montre la figure 5, et coupe de ce fait le moteur ou interrompt l'entraînement des couteaux.

Mais il est essentiel que, lors de cette interruption du fonctionnement, les leviers 2 et 3 reviennent dans leur position basse sur le guidon 1 et ne pointent plus de façon gênante vers le haut. Ce retour à la position de marche basse peut être assuré par le poids propre des pièces ou être assisté par des éléments à ressort.

Enfin, on voit également sur la figure 7 qu'entre l'épaulement 3c et le verrou 6, il y a un jeu de quelques millimètres. L'avantage de ce jeu est que l'utilisateur n'est pas obligé de maintenir le levier de commande 2 toujours exactement dans la position de marche, mais qu'il peut relâcher la position de quelques millimètres, sans risque d'arrêter la tondeuse. De ce fait, l'utilisateur petit maintenir le levier de commande 2 de façon beaucoup plus détendue et moins fatigante.

## Revendications

1. Dispositif de commande pour tondeuses à gazon à moteur autotractées, composé d'un guidon (1) muni de deux leviers de commande (2, 3) pour l'entraînement, qui sont montés sur le guidon de manière à pouvoir passer d'une position de marche sur le guidon (1) à une position dans laquelle ils font saillie de celui-ci, et qui ne permettent une mise en marche que lorsqu'ils sont actionnés simultanément, au moins l'un (2) des leviers de commande cités (2, 3) faisant office de dispositif d'homme mort et le guidon (1) présentant éventuellement encore d'autres leviers (4), notamment pour le dispositif de traction, caractérisé en ce que l'un (3) des deux leviers de commande (2, 3) est réalisé en tant qu'embrayage et, lorsqu'il est actionné, établit une liaison entre lui et/ou l'autre levier de commande (2), d'une part, et l'entraînement, d'autre part, et en ce que, à l'état désaccouplé, les deux leviers se mettent automatiquement dans une position sur le guidon (1) dans laquelle ils n'en dépassent pas.

2. Dispositif de commande selon la revendication 1, caractérisé en ce que les leviers de commande (2, 3) à l'état désaccouplé sont contraints par leur poids propre et/ou par la force d'un ressort vers le guidon (1).

3. Dispositif de commande selon la revendication 1, caractérisé en ce qu'en embrayant, le levier de commande (3) réalisé en tant qu'embrayage se met en liaison active avec l'autre levier de commande (2) de telle manière que le déplacement de l'autre levier de commande (2) en position de marche entraîne automatiquement le levier de commande (3) cité en premier lieu.

4. Dispositif de commande selon la revendication 1, caracténsé en ce que le levier de commande (3) réalisé en tant qu'embrayage est réalisé à la manière d'une barre et est disposé sous l'autre levier de commande (2), approximativement dans l'alignement de celui-ci.

5. Dispositif de commande selon la revendication 1, caractérisé en ce que l'embrayage se produit lorsqu'au moins l'un des leviers de commande (2, 3) est dans une position dans laquelle il fait saillie du guidon (1).

6. Dispositif de commande selon la revendication 1, caractérisé en ce qu'il est conçu de telle manière que le débrayage s'effectue brusquement lors du relâchement du levier de commande (2) à partir de la position de marche.

7. Dispositif de commande selon la revendication 1, caractérisé en ce que l'embrayage est composé d'une griffe (3b) placée sur le levier de commande (3), qui est en liaison active amovible avec un levier (30) agissant sur l'entraînement.

8. Dispositif de commande selon la revendication 1, caractérisé en ce que le débrayage est opéré par un verrou mobile (6) qui s'enclenche sur le levier de commande (3).

9. Dispositif de commande selon la revendication 1, caractérisé en ce qu'avant le débrayage, le levier de commande (2) effectue dans sa zone de prise un parcours à vide compris entre au moins 1/2 cm et 2 cm environ.

10. Dispositif de commande selon la revendication 1, caractérisé en ce que le levier de commande (3) faisant office d'embrayage est monté sur l'autre levier de commande (2) et ce dernier (2), sur le guidon (1).

11. Dispositif de commande selon la revendication 1, caractérisé en ce que le levier de commande (2) est réalisé en tant qu'étrier en U qui, en position de marche, est appliqué contre le guidon, approximativement dans l'alignement de celui-ci.

12. Dispositif de commande selon la revendication 11, caractérisé en ce que le levier de commande (2) présente une baguette profilée faisant saillie (7), qui entoure partiellement le guidon (1) dans la position de marche.

## Claims

1. Control device for self-propelling motorised lawn mowers, consisting of a handlebar (1) fitted with two drive control levers (2, 3) mounted on the handlebar so that they can move from a driving position on the handlebar (1) to a position in which they project upwards therefrom, and which only allow the mower to be started when they are actuated simultaneously, at least one (2) of the said control levers (2, 3) acting as a "dead-man" device, while the handlebar (1) can if necessary have other levers (4) as well, notably associated with the drive mechanism,
**characterised in that**
one (3) of the two control levers (2, 3) is constructed as a clutch engagement lever and, when actuated, establishes a link between itself and/or the other control lever (2) on the one hand, and the drive mechanism on the other hand, **and in that**
in the uncoupled condition the two levers automatically assume a position on the handlebar (1) in which they do not project beyond it.

2. Control device according to Claim 1,
**characterised in that**
in the uncoupled condition, the control levers (2, 3) are held down towards the handlebar (1) by their own weight and/or by the force of a spring.

3. Control device according to Claim 1,
**characterised in that**
when the clutch is engaged, the control lever (3) constructed as a clutch engagement lever comes into engagement with the other control lever (2), such that the movement of the said other control lever (2) to the running position automatically moves the control lever (3) first mentioned.

4. Control device according to Claim 1,
**characterised in that**
the control lever (3) constructed as a clutch engagement lever is made in the form of a bar and is arranged under the other control lever (2) approximately in alignment therewith.

5. Control device according to Claim 1,
**characterised in that**
the clutch is engaged when at least one of the control levers (2, 3) is in a position in which it projects from the handlebar (1).

6. Control device according to Claim 1,
**characterised in that**
it is designed such that the clutch is disengaged abruptly when the control lever (3) is released from the running position

7. Control device according to Claim 1,
**characterised in that**
the clutch consists of a claw (3b) located on the control lever (3), which is in active mobile engagement with a lever (30) acting upon the drive system.

8. Control device according to Claim 1,
**characterised in that**
the clutch release is operated by a movable locking device which engages on the control lever (3)

9. Control device according to Claim 1,
**characterised in that**
before the clutch is released, the control lever (2) has within its zone of action a free play zone between at least 1/2 cm and about 2 cm.

10. Control device according to Claim 1,
**characterised in that**
the control lever (3) acting as a clutch engagement lever is fitted on the other control lever (2), and the latter (2) is fitted on the handlebar (1).

11. Control device according to Claim 1,
**characterised in that**
the control lever (2) is formed as a U-shaped stirrup which, in the running position, is held against the handlebar in approximate alignment therewith.

12. Control device according to Claim 11,
**characterised in that**
the control lever (2) has a profiled projecting catch (7) which partially surrounds the handlebar (1) in the running position.

## Patentansprüche

1. Bedienvorrichtung für durch Motor selbstfahrende Rasenmäher, bestehend aus einem Führungsbügel (1) mit zwei Bedienhebeln (2, 3) für den Antrieb, die am Führungsbügel gelagert sind, um sich aus einer Position am Führungsbügel in eine Position bewegen zu können, in der sie von diesem abstehen, und die nur eine Inbetriebnahme ermöglichen, wenn sie gleichzeitig betätigt werden, wobei zumindest einer (2) der genannten Bedienhebel (2, 3) die Aufgabe als Totmannschalter übernimmt und der Führungsbügel (1) gegebenenfalls noch weitere Hebel (4) aufweist, insbesondere für den Fahrantrieb,
dadurch gekennzeichnet,
daß einer (3) der beiden Bedienhebel (2, 3) als Kupplung ausgebildet ist und bei seiner Betätigung eine Verbindung zwischen ihm und/oder dem anderen Bedienhebel (2) einerseits und dem Antrieb andererseits bewirkt und daß in ausgekuppeltem Zustand beide Bedienhebel (2, 3) selbsttätig eine nicht abstehende Position am Führungsbügel (1) einnehmen.

2. Bedienvorrichtung nach Anspruch 1,
dadurch gekennzeichnet,
daß die Bedienhebel (2, 3) in ausgekuppeltem Zustand durch ihr Eigengewicht und/oder Federkraft in Richtung auf den Führungsbügel (1) belastet sind.

3. Bedienvorrichtung nach Anspruch 1,
dadurch gekennzeichnet,
daß beim Einkupplung der als Kupplung ausgebildete Bedienhebel (3) in derartige Wirkverbindung mit dem anderen Bedienhebel (2) gelangt, daß die Verstellung des anderen Bedienhebels (2) in die Betriebsposition selbsttätig die Mitnahme des erstgenannten Bedienhebels (3) bewirkt.

4. Bedienvorrichtung nach Anspruch 1,
dadurch gekennzeichnet,
daß der als Kupplung fungierende Bedienhebel (3) stabartig ausgebildet und etwa fluchtend unterhalb des anderen Bedienhebels (2) angeordnet ist.

5. Bedienvorrichtung nach Anspruch 1,
dadurch gekennzeichnet,
daß das Einkuppeln erfolgt, wenn wenigstens einer der Bedienhebel (2, 3) in einer vom Führungsbügel (1) abstehenden Position ist.

6. Bedienvorrichtung nach Anspruch 1,
dadurch gekennzeichnet,
daß sie so entworfen ist, daß das Auskuppeln schlagartig erfolgt beim Loslassen des in der Betriebsstellung befindlichen Bedienhebels (2).

7. Bedienvorrichtung nach Anspruch 1,
dadurch gekennzeichnet,
daß die Kupplung aus einer an einem Bedienhebel (3) angeordneten Klaue (3b) besteht, die in lösbarer Wirkverbindung mit einem auf den Antrieb einwirkenden Hebel (30) steht.

8. Bedienvorrichtung nach Anspruch 1,
dadurch gekennzeichnet,
daß das Auskuppeln der Kupplung durch einen beweglichen Riegel (6) erfolgt, der sich an dem Bedienhebel (3) einrastet.

9. Bedienvorrichtung nach Anspruch 1,
dadurch gekennzeichnet,
daß vor dem Auskuppeln der Bedienhebel (2) in seinem Griffbereich einen Freiweg durchführt, der zwischen etwa einem halben Zentimeter bis etwa 2 cm liegt.

10. Bedienvorrichtung nach Anspruch 1,
dadurch gekennzeichnet,
daß der als Kupplung fungierende Bedienhebel (3) an dem anderen Bedienhebel (2) und letzterer (2) am Führungsbügel (1) gelagert ist.

11. Bedienvorrichtung nach Anspruch 1,
dadurch gekennzeichnet,
daß der Bedienhebel (2) als U-förmiger Bügel ausgebildet ist, der in der Betriebsposition etwa fluchtend am Führungsbügel anliegt.

12. Bedienvorrichtung nach Anspruch 11,
dadurch gekennzeichnet,
daß der Bedienhebel (2) eine abstehende Profilleiste (7) aufweist, die den Führungsbügel (1) in der Betriebsposition teilweise umgibt.
